# DEMANDE DE BREVET EUROPEEN

(11) **EP 1 818 822 A1**
(43) Date de publication de la demande: **15.08.2007**
(21) Numéro de dépôt: 07101982.2
(22) Date de dépôt: 08.02.2007
(51) Int. Cl.: G06F 9/445

(54) **Procédé et serveur de distribution de composants logiciels, et procédé de mise à jour et terminal et produits programme d'ordinateur correspondants**

(30) Priorité: 10.02.2006 FR 0601222
(71) Demandeur: FRANCE TELECOM, 75015 Paris (FR)
(72) Inventeur: Longeanie, Arnaud, 35250 Saint Germain sur Ille (FR); Chevalier, Nathalie, 35520 La Mezière (FR); Scotto, Yves, 35235 Thorigne Fouillard (FR)
(74) Mandataire: Bioret, Ludovic

(57) **Abrégé**

L'invention concerne un procédé de distribution d'au moins un premier composant logiciel, au sein d'un terminal programmable, ledit terminal programmable disposant préalablement d'au moins un deuxième composant logiciel correspondant audit au moins un premier composant logiciel, dans une version différente,

Selon l'invention, un tel procédé comprend une étape de remplacement dudit au moins un deuxième composant logiciel par ledit au moins un premier composant logiciel, si ledit au moins un premier composant logiciel est d'une version antérieure.

## Description

### 1. Domaine de l'invention

La présente invention est notamment destinée à des applications de gestion de composants logiciels.

Plus précisément, l'invention concerne la gestion de composants logiciels et de versions de ces composants sur des terminaux programmables.

L'invention concerne notamment le domaine de la mise à jour de logiciels sur des ordinateurs, des téléphones portables, des assistants personnels, des STB « Set Top Box » pour « Terminal Numérique Interactif » et plus généralement, tout terminal programmable disposant d'un accès à un réseau de communication ou à un périphérique permettant de mettre à jour des logiciels.

La croissance de l'équipement des foyers, tant au niveau du nombre d'ordinateurs personnels qu'au niveau du nombre de connexions à l'Internet a eu pour effet d'accroître des échanges de données entre des utilisateurs et de produire une grande quantité d'installations logicielles sur les terminaux programmables de ces utilisateurs. Cependant, une grande majorité de ces utilisateurs ne fait pas partie des professionnels de l'informatique. Ainsi, pour ces personnes, une installation et une mise à jour de logiciels peuvent devenir problématiques.

### 2. Solutions de l'art antérieur

### 2.1. Art antérieur

La plupart des terminaux programmables actuels offrent une possibilité d'installer des composants logiciels : applications informatiques, jeux, logiciels de gestion de périphériques. Cependant, l'installation de ces composants est interactive et nécessite certaines compétences de la part des utilisateurs. L'installation de ces composants est réalisée en suivant des principes établis tels qu'une adaptation de composants au terminal, une installation automatique de composants, une utilisation de zones d'amorce ou de manifestes de fichiers et une gestion des versions logicielles. Ces notions sont explicitées par la suite.

### 2.1.1. Adaptation au terminal

Dans l'état actuel des connaissances, le processus de téléchargement et d'installation de composants logiciels permet d'adapter les composants aux possibilités techniques de l'équipement terminal cible. On peut citer par exemple l'installation d'un logiciel pour piloter une carte graphique.

### 2.1.2 Installation semi automatique

Certains procédés pour prendre en compte un nouveau sous-ensemble permettent également l'installation pendant un état de fonctionnement de l'équipement et avec une reconnaissance automatique des composants et leur installation quasiment sans intervention de l'utilisateur, par exemple le « plug-and-play » (« branchez et jouez ») de certains systèmes d'exploitation.

### 2.1.3. « Amorce »

De nombreux dispositifs programmables utilisent un concept d'« amorce » (ou « bootstrap » en anglais) : un élément de programme minimal qui initie une processus de démarrage. L'action de ce « bootstrap » consiste à vérifier une présence, télécharger si nécessaire, puis à lancer l'exécution d'un composant logiciel suivant dans le processus de démarrage. Cette première étape permet d'obtenir, de modifier et d'installer d'autres composants logiciels automatiquement, le « bootstrap » étant en revanche non modifiable automatiquement.

### 2.1.4. « Manifeste »

D'autres procédés utilisent également une notion de « Manifeste » (« Manifest » en anglais) qui est une liste de fichiers constituant une application. Ce « manifest » est téléchargé en premier de façon à savoir quoi télécharger ensuite. L'équipement programmable ne télécharge alors que des fichiers qui n'ont pas déjà été téléchargés. Ce mode de fonctionnement permet de mutualiser certains fichiers entre applications.

### 2.1.5. Versions

Lors d'une diffusion d'un composant qui s'appuie sur d'autres composant, des dépendances entre les évolutions de chacun des composants constituent une difficulté majeure lorsque des interactions entre composants sont modifiées.

Les logiciels actuels sont nombreux à être basés sur un principe développement lié à une « API » (abréviation de « Application Programming Interface » pour « Interface de programmation d'applications »), qui définit un ensemble de routines, protocoles et outils pour développer des logiciels applicatifs. Une bonne API rend plus facile un développement d'un programme en fournissant tous les blocs pour la construction d'applications. Un programmeur assemble ensuite ces blocs.

Ainsi, pour un changement d'API tous les composants basés sur cette API doivent être modifiés. En général, ce problème est résolu par un système de gestion de numéro de version pour chaque composant. Le numéro de version d'un composant est incrémenté à chaque évolution du composant. Si ce composant utilise d'autres composants, des numéros de versions minima compatibles des composants utilisés lui sont associés pour constituer des règles de dépendances.

Sur l'équipement, pour chaque composant, si une nouvelle version est disponible (c'est-à-dire le numéro de la version sur le serveur est supérieur au numéro de version sur l'équipement), le composant est téléchargé et installé après au moins une vérification de règles de dépendances. Si ces règles imposent une nouvelle version d'un composant utilisé, ce dernier est au préalable mis à jour et ceci récursivement.

Afin de limiter les interrogations du serveur quant aux numéros de versions des composants, il est possible de constituer sur le serveur une liste de versions de tous les composants et de télécharger cette liste sur l'équipement. Le système des versions permet de faire évoluer des composants logiciels qui coopèrent.

### 2.2. Inconvénients de l'art antérieur

Un inconvénient de l'art antérieur est posé notamment par le cas des utilisateurs non technophiles. En effet, pour un utilisateur de ce type, les équipements programmables à sa disposition restent difficiles à faire évoluer, soit lors d'un changement d'équipement, soit lors d'une évolution de cet équipement, soit même lors de la souscription à un nouveau service utilisant cet équipement.

Les opérations de transfert d'un composant logiciel depuis un serveur de logiciels, les informations demandées lors de l'installation de ce composant logiciel, le temps d'attente (lié au débit de la ligne utilisée pour le téléchargement et au temps de mise à jour) sans comprendre ce que l'équipement fait avant de pouvoir réellement utiliser peuvent représenter des éléments rédhibitoires qui pénalisent la pénétration des technologies.

Un autre inconvénient de cette technique de l'art antérieur est lié à la mise en place de nouveaux services. Pour un utilisateur qui souscrit à un nouveau service, le logiciel nécessaire (il doit savoir lequel) doit être téléchargé (il doit savoir depuis quel serveur) par l'utilisateur qui procède ensuite à son installation avec la succession des saisies d'informations (parfois techniques) requises par le concepteur du logiciel. Ces deux opérations nécessitent un niveau de technicité non négligeable et des temps d'attente sans possibilité d'utiliser l'équipement.

Encore un autre inconvénient de cette technique de l'art antérieur est lié à l'installation ou à la réinstallation d'un nouvel équipement. En effet lors de l'installation sur un nouvel équipement ou la réinstallation sur un équipement (par exemple dans le cas du changement de système d'exploitation ou de disque dur sur un PC), l'utilisateur doit re-installer tous les composants logiciels de tous les services auxquels il a souscrit. C'est une tâche longue qui nécessite un haut niveau de technicité.

Un autre inconvénient de ces techniques de l'art antérieur est lié aux évolutions des composants logiciels d'une application. Lors d'une évolution d'un composant logiciel, les équipements qui utilisent ces composants mettent à jour leurs versions de composants au fur et à mesure de leur mise en route par les utilisateurs. Ainsi, la charge due au téléchargement des nouveaux composants dans le cadre d'une exploitation avec un grand nombre d'équipements (par exemple plusieurs millions) est lissée dans le temps. Mais, si on constate un dysfonctionnement au début de l'utilisation de cette nouvelle version N', il peut être judicieux, voire nécessaire, d'effectuer un retour vers la version précédente N. Avec le système actuel de gestion de version se basant sur le numéro le plus élevé de version, il faut refaire une nouvelle version N" du composant pour incrémenter le numéro de version du composant et provoquer sa mise à jour sur les équipements qui avaient déjà téléchargé la mauvaise version N'. Cette technique doit également être appliquée à l'ensemble des composants dépendants de la version N' défectueuse.

De plus, les autres équipements (ceux qui n'avaient pas téléchargé la version N') téléchargeront quand même la nouvelle version N", mais pour rien puisque la nouvelle version N" est identique (en terme de fonctionnalité) à la version initiale N. Cette technique de l'art antérieur, largement utilisée, implique un fort gaspillage des ressources des réseaux et une perte de temps significative pour les utilisateurs.

### 3. Objectifs de l'invention

L'invention a notamment pour objectif de pallier ces inconvénients de l'art antérieur.

Plus précisément, un objectif de l'invention, dans au moins un mode de réalisation, est de fournir une technique permettant de supprimer les interventions des utilisateurs, en évitant les inconvénients des systèmes classiques mettant en oeuvre les installations semi-automatiques.

Plus précisément, un objectif de l'invention, dans au moins un mode de réalisation, est de fournir une technique qui permette de s'affranchir des opérations de transfert et d'installation manuelles lors de la souscription à un nouveau service qui nécessite de nouveaux composants logiciels.

Un autre objectif de l'invention, dans au moins un mode de réalisation, est de fournir un mécanisme qui évite la répétition des opérations de transfert et d'installation manuels lors de l'installation sur un nouvel équipement ou la re-installation des composants sur le même équipement.

L'invention a encore pour objectif, dans au moins un mode de réalisation, de fournir un mécanisme permettant aux équipements de limiter les téléchargements inutiles, notamment lors des évolutions de versions logicielles.

### 4. Résumé de l'invention

Ces objectifs, ainsi que d'autres qui apparaîtront plus clairement par la suite, sont atteints selon l'invention à l'aide d'un procédé de distribution d'au moins un premier composant logiciel, au sein d'un terminal programmable, ledit terminal programmable disposant préalablement d'au moins un deuxième composant logiciel correspondant audit au moins un premier composant logiciel, dans une version différente,

Ledit procédé comprend une étape de remplacement dudit au moins un deuxième composant logiciel par ledit au moins un premier composant logiciel, si ledit au moins un premier composant logiciel est d'une version antérieure.

Il est à noter que l'invention repose sur une approche tout à fait distincte des approches classiques selon lesquelles un changement de version n'est envisagé que si la version courante d'un composant est antérieure à la dernière version disponible.

L'approche du procédé conforme à l'invention va à contre courant de cette approche classique en imposant au terminal d'utiliser une certaine version d'un composant logiciel donné, quand bien même ce terminal disposerait d'une version postérieure dudit composant.

Suivant les techniques de l'art antérieur, les systèmes de gestion de version qui se basent sur le numéro le plus élevé de version, provoquent la construction d'une nouvelle version N" d'un composant ayant le même contenu qu'une version initiale N, afin d'incrémenter le numéro de version dudit composant et provoquer sa mise à jour sur des équipements qui auraient auparavant remplacé la version N par une mauvaise version N'. Ces mises à jour sont consommatrices de ressources et génératrices de délais. L'invention permet de supprimer ces consommations inutiles.

Avantageusement, un composant logiciel peut être associé à au moins un service, ledit procédé comprenant les étapes suivantes :
- identification d'au moins un premier composant logiciel, appartenant à un premier ensemble de composants logiciels correspondant à au moins un service souscrit par ledit terminal programmable ;
- recherche d'une différence de version entre au moins un composant logiciel dudit premier ensemble et au moins un composant d'un deuxième ensemble de composants logiciels correspondants précédemment installés au sein dudit terminal programmable.

Ainsi, il est possible de mettre à jour efficacement et simplement les versions de composants logiciels qui sont réunis au sein d'ensembles : un premier ensemble de composants issus de l'entité de gestion de services et un deuxième ensemble de composants installé au sein du terminal programmable. Entre autres avantages une telle mise à jour est réalisée grâce à l'invention sans intervention de l'utilisateur, et donc sans imposer à ce dernier d'acquérir de connaissance particulière à ce sujet. Cette mise à jour est basée sur une notion de services souscrits par l'utilisateur, et non pas sur la notion de configuration matérielle du terminal programmable de celui-ci. De ce fait, la mise à jour logicielle n'est plus liée à des caractéristiques matérielles, mais à des caractéristiques de souscription à des services. Ces services peuvent avantageusement être gérés et/ou référencés au sein d'une entité de gestion d'un ensemble de services, associant des services à des composants logiciels.

De façon avantageuse, ladite étape de recherche comprend en outre les étapes suivantes :
- constitution d'une première liste de composants logiciels dépendants d'au moins un des composants logiciels dudit premier ensemble ;
- ajout des composants de ladite première liste audit premier ensemble.

Ainsi, on lie des composants logiciels dépendants aux services souscrits par l'utilisateur. Le mécanisme permet donc, non seulement de remplacer les composants logiciels du premier ensemble, mais également de remplacer tous les composants qui dépendent d'au moins un composant du premier ensemble.

Dans ce cas, ladite étape de constitution de ladite première liste, comprend avantageusement :
- une étape de détermination d'un arbre de dépendances de composants logiciels dépendants dudit composant logiciel dudit premier ensemble ;
- une étape de construction d'une deuxième liste de composants logiciels dépendant de chaque composant logiciel dudit arbre de dépendances ;
- une étape d'insertion des composants de ladite deuxième liste au sein de ladite première liste.

Par extension, on créé un ensemble de composants logiciels dépendant des composants du premier ensemble. Ce nouvel ensemble est basé sur toutes les dépendances des composants du premier ensemble. Par exemple, il est possible que le premier ensemble contienne deux composant C et C' qui dépendent d'un même composant C" (de l'arbre de dépendance). Dans ce cas, le composant C" ne sera ajouté qu'une seule fois à la deuxième liste et l'ensemble des composants dépendants de C" sera ajouté à la deuxième liste.

Préférentiellement, ladite étape de constitution est réalisée récursivement pour chaque composant logiciel de ladite deuxième liste.

De cette façon, on applique les étapes de recherche de dépendance jusqu'à épuisement des dépendances entre les composants. On s'assure ainsi qu'il n'est pas possible d'omettre des composants dépendants dans la liste, ce qui permet d'assurer le bon fonctionnement du terminal quand les mises à jour seront terminées.

De façon avantageuse, ladite étape de constitution de ladite première liste comprend en outre une étape de vérification de la souscription par ledit terminal programmable à au moins un service lié auxdits composants logiciels constituant ladite première liste.

Ainsi, seuls les composants liés aux services souscrits par les utilisateurs seront pris en compte. Par exemple, si le premier ensemble contient un composant C qui a trois dépendance C', C" et C"', mais que C'" fait parti d'un service non souscrit par l'utilisateur, alors ce composant C"' ne sera pas pris en compte. On minimise ainsi les ressources nécessaires à la mise à jour et à la distribution des composants.

Selon un mode de réalisation préférentiel de l'invention, ladite étape de constitution de ladite première liste comprend en outre une étape de vérification d'une adéquation matérielle audit terminal programmable audit composants logiciels constituant ladite première liste.

De cette façon, on s'assure que les composants remplacés sont en adéquation avec les capacités matérielles du terminal programmable. Cette étape de vérification permet de contrecarrer les mises à jours de composants pour des services auxquels l'utilisateur a souscrit, mais que son terminal ne permette pas d'exécuter.

Selon un autre aspect particulier de l'invention, ladite étape d'identification fait appel à une base de données associant à un identifiant de chaque souscripteur, une liste d'au moins un service souscrit d'une part et ledit premier ensemble d'autre part.

Ainsi, l'identification du terminal programmable permet de s'assurer que les services souscrits sont bien enregistrés au sein d'un base de données et pas au sein du terminal. On augmente donc le niveau de sécurité du système en ne permettant pas à un terminal de télécharger des composants correspondant à des services auxquels il n'a pas souscrit et on diminue ainsi les risques de piratage.

L'invention concerne également un procédé de mise à jour d'un moins un premier composant logiciel, au sein d'un terminal programmable.

Selon l'invention ledit premier composant logiciel est associé à au moins un service et ledit procédé comprend les étapes suivantes :
- demande de recherche d'une différence de version entre ledit au moins un premier composant logiciel et au moins un deuxième composant logiciel correspondant précédemment installés au sein dudit terminal programmable ;
- réception dudit au moins un premier composant logiciel dont la version est différente dudit au moins un deuxième composant logiciel ;
- remplacement sur ledit terminal programmable dudit au moins un deuxième composant logiciel par ledit au moins un premier composant logiciel dont la version est antérieure.

Comme mentionné plus haut, l'invention permet une mise à jour simple et efficace. Elle permet, en outre, tout aussi facilement un retour à une version précédente, si nécessaire.

L'invention concerne également un système de distribution d'au moins un premier composant logiciel, au sein d'un terminal programmable, ledit terminal programmable disposant préalablement d'au moins un deuxième composant logiciel correspondant audit au moins un premier composant logiciel, dans une version différente,

Selon l'invention, un tel système comprend des moyens de remplacement dudit au moins un deuxième composant logiciel par ledit au moins un premier composant logiciel, si ledit au moins un premier composant logiciel est d'une version antérieure.

L'invention concerne également un serveur de distribution d'au moins un premier composant logiciel, au sein d'un terminal programmable, ledit terminal programmable disposant préalablement d'au moins un deuxième composant logiciel correspondant audit au moins un premier composant logiciel, dans une version différente, ledit serveur mettant en oeuvre le procédé décrit ci-dessus. Un tel serveur comprend notamment :
- des moyens d'identification d'au moins un premier composant logiciel, appartenant à un premier ensemble de composants logiciels correspondant à au moins un service souscrit par ledit terminal programmable ;
- des moyens de recherche d'une différence de version entre au moins un composants logiciels dudit premier ensemble et au moins un composant d'un deuxième ensemble de composants logiciels correspondants précédemment installés au sein dudit terminal programmable ;
- transmission audit terminal programmable des composants logiciels dudit premier ensemble dont la version est différente de ceux dudit deuxième ensemble.

Un tel serveur peut comprendre, plus généralement, des moyens pour mettre en oeuvre tout ou partie des étapes du procédé détaillées ci-dessus.

Ainsi le serveur gère l'ensemble des opérations de vérification, d'identification, de recherche et de transmission, déchargeant ainsi le terminal de ces opérations et augmentant sensiblement la sécurité du système en diminuant les risques de piratage.

L'invention concerne encore les terminaux comprenant des moyens de mise à jour d'au moins un premier composant logiciel, ledit terminal programmable disposant préalablement d'au moins un deuxième composant logiciel correspondant audit au moins un premier composant logiciel, dans une version différente,

Un tel terminal comprend des moyens de remplacement dudit au moins un deuxième composant logiciel par ledit au moins un premier composant logiciel, si ledit au moins un premier composant logiciel est d'une version antérieure.

Avantageusement, ledit premier composant logiciel est associé à au moins un service référencé au sein d'une entité de gestion d'un ensemble de services, et ledit terminal programmable comprend :
- des moyens de demande de recherche d'une différence de version entre ledit au moins un premier composant logiciel et au moins un deuxième composant logiciel correspondant précédemment installés au sein dudit terminal programmable ;
- des moyens de réception dudit au moins un premier composant logiciel dont la version est différente dudit au moins un deuxième composant logiciel.

Un tel terminal peut comprendre, plus généralement, des moyens pour mettre en oeuvre tout ou partie des étapes du procédé détaillées ci-dessus.

L'invention concerne également les programmes d'ordinateur pour la mise en oeuvre des procédés décrits ci-dessus, dans un serveur d'une part et dans un terminal d'autre part.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'un mode de réalisation conduisant à la mise à jour des composants logiciels ;
- la figure 2 illustre l'architecture matérielle liée à la mise en place des étapes du procédé de la figure 1 ;
- la figure 3 décrit l'emplacement des informations échangées entre les différents acteurs de la figure 2 selon le procédé de la figure 1 ;
- la figure 4 illustre les étapes du procédé en relation avec des acteurs de la figure 2 ;
- la figure 5 illustre l'architecture matérielle du terminal programmable selon l'invention ;
- la figure 6 illustre l'architecture matérielle du serveur de composants logiciels selon l'invention ;
- la figure 7 illustre l'architecture matérielle de l'entité de gestion de services selon l'invention.

### 6. Description détaillée de l'invention

### 6.1. Rappel du principe de l'invention

L'invention propose donc de simplifier l'utilisation des équipements en masquant à l'utilisateur l'adaptation des composants logiciels et de limiter le trafic sur le réseau d'interconnexion en, dans au moins un mode de réalisation :
- s'affranchissant des opérations de transfert et d'installation manuels lors de la souscription à un service qui nécessite de nouveaux composants logiciels ;
- évitant de répéter les opérations de transfert et d'installation manuels lors de l'installation sur un nouvel équipement ou la re-installation sur le même équipement d'un ensemble de composants logiciels ;
- n'ayant pas le besoin technique ou fonctionnel de télécharger des composants logiciels inutilement afin de ne pas utiliser pas le réseau et de ne pas faire attendre l'utilisateur.

Dans ce contexte, un mode de réalisation de l'invention consiste en un mécanisme ne nécessitant pas de manipulation de la part d'un utilisateur qui souscrit à un nouveau service, ne nécessitant pas de manipulation inutile de la part de l'utilisateur qui désire utiliser un nouvel équipement ou re-installer sur son équipement, et optimisant les mises à jour des composants sur les équipements.
Dans ce mode de réalisation, l'invention se propose de réactualiser au moins un composant logiciel d'un ensemble de logiciels d'une application, en comparant si le numéro de la version courante d'un composant logiciel est différent (inférieur ou supérieur) de la version proposée par le serveur de composants logiciels, si c'est le cas, en remplaçant le composant logiciel par celui du serveur.

Il est important de noter que, contrairement aux techniques classiques, le test effectué est un test de différence, et non un test visant uniquement à vérifier que le numéro de version courante est inférieur au numéro de version proposée. Cette approche nouvelle, qui va à l'encontre des habitudes, permet de fortement simplifier les traitements, et notamment le retour à une version précédente.

Optionnellement, les composants proposés par le serveur pour un terminal correspondent uniquement à ceux nécessaires pour la mise en oeuvre des services identifiés auprès d'un serveur d'identification des services.

Optionnellement, lorsque le composant logiciel n'est pas présent sur le terminal, il est chargé sur celui-ci.

Plus particulièrement, dans ce mode de réalisation, l'invention propose un mécanisme de téléchargement et d'insertion de composants logiciels sur des équipements terminaux programmables de type différents. Ces composants sont fournis par l'intermédiaire d'un réseau d'interconnexion depuis un équipement central qui a le rôle de serveur de composants logiciels. Le procédé s'appuie également sur un équipement central qui a un rôle de serveur d'identification des services auxquels l'utilisateur a souscrit. Ces deux rôles peuvent être regroupés ou non dans un même équipement central accessible par l'intermédiaire du réseau d'interconnexion.

Le procédé qui se déroule sur l'équipement terminal prend en charge :
- l'analyse des composants logiciels exigés :
   - par les caractéristiques techniques de l'équipement terminal ;
   - et par les services souscrits obtenus par interrogation auprès du serveur d'identification de services.
- l'éventuel téléchargement des composants depuis le serveur de logiciels ;
- leur insertion dans l'application sur ledit équipement terminal ;
- le transfert de l'exécution au composant logiciel de l'application.

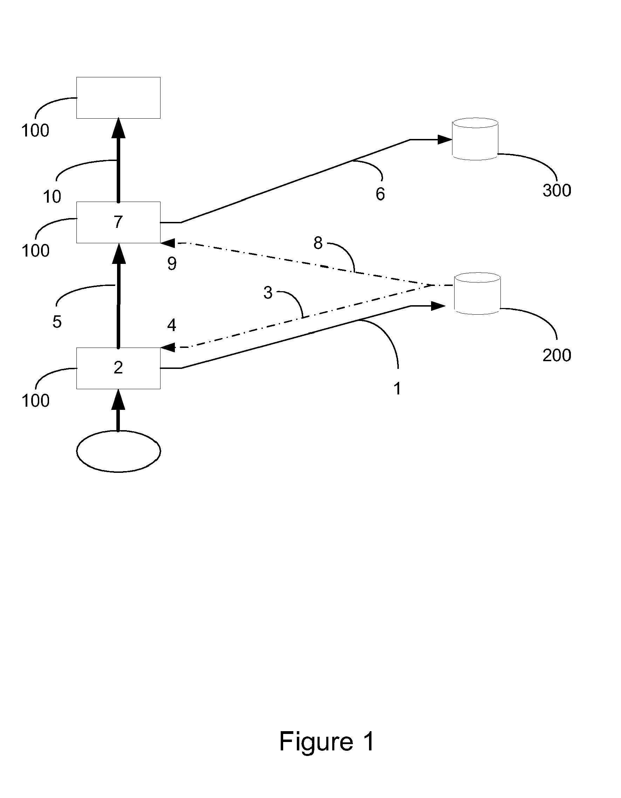

On décrit, en relation avec la figure 1, les étapes conduisant à la mise en oeuvre des actions du procédé selon ce mode de réalisation :
1. une étape de connexion au serveur de logiciels 200 et de récupération des versions des composants logiciels ;
2. une étape de vérification, au sein du terminal 100, de la validité de la version locale du composant logiciel de gestion des composants logiciels ;
3. une étape facultative de téléchargement du composant logiciel de gestion des composants logiciels ;
4. une étape facultative d'installation du composant logiciel de gestion des composants logiciels, au sein du terminal 100 ;
5. une étape de lancement du composant logiciel de gestion des composants logiciels, au sein du terminal 100 ;
6. une étape de connexion au serveur d'identification de services 300 et de récupération des services souscrits ;
7. une étape de vérification des composants logiciels nécessaires et des versions locales présentes selon les possibilités techniques de l'équipement terminal et les services souscrits au sein du terminal 100 ;
8. une étape facultative de téléchargement de composants logiciels au sein du terminal 100 ;
9. une étape facultative d'installation de composants logiciels au sein du terminal 100 ;
10. une étape de lancement du composant logiciel applicatif au sein du terminal 100 ;

Dans ce mode de réalisation, la gestion des composants logiciels est réalisée conjointement par l'entité de gestion des composants logiciels (le serveur de logiciels 200) et par le terminal programmable 100 à l'aide d'un composant logiciel de gestion des composants logiciels. Ce composant logiciel générique est chargé de mettre en oeuvre certaines étapes du mécanisme, afin de s'assurer notamment, que les composants logiciels qui vont être téléchargés sont en adéquation avec les services souscrits par les utilisateurs du terminal programmable. Par exemple, il n'est pas nécessaire de télécharger des composants servant à la réception de canaux de diffusions de programmes audiovisuels numériques si l'utilisateur n'a pas souscrit à un tel service.

Cette approche permet de diminuer fortement les volumes et les temps de téléchargement en s'assurant que seuls les composants logiciels nécessaires seront téléchargés. En effet, en reprenant l'exemple précédent, si un des composants servant à la réception de canaux de diffusions de programmes audiovisuels a été modifié et que ce composant entraîne la modification d'autres composants logiciels associés à d'autres services auxquels l'utilisateurs a souscrit, il n'y aura, dans ce cas de figure, qu'à télécharger les composants obligatoires, sans qu'il soit nécessaire de télécharger l'ensemble des composants de réception de canaux de diffusions de programmes audiovisuels.

### 6.2. Description d'un mode de réalisation

Par la suite, on présente notamment le cas d'une mise en oeuvre du procédé de mise à jour dans le cas de la souscription à des services en ligne d'équipement terminaux de type « ordinateur personnel ». Il est clair cependant que l'invention ne se limite pas à cette application particulière, mais peut également être mise en oeuvre dans de nombreux autres domaines, et par exemple dans la téléphonie mobile et plus généralement dans tous les cas où au moins un des objectifs précités de l'invention est à atteindre.

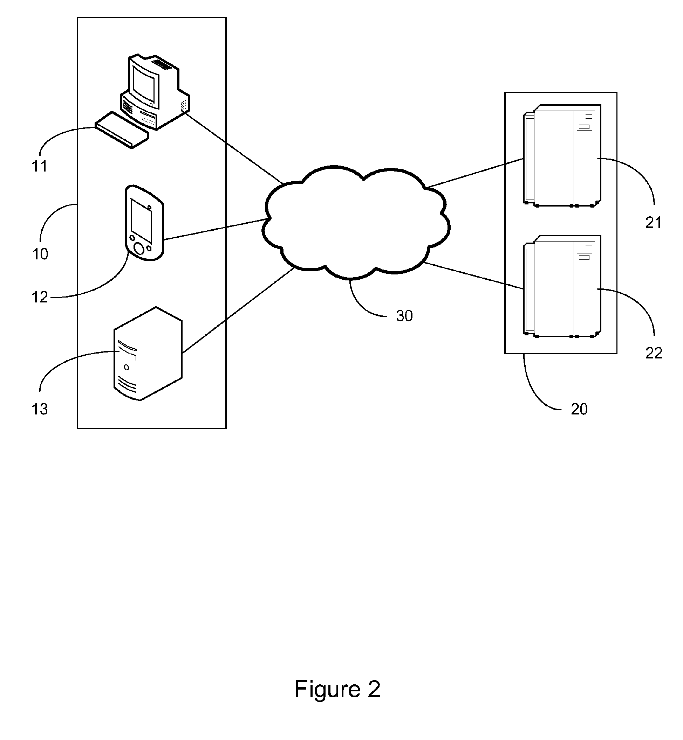

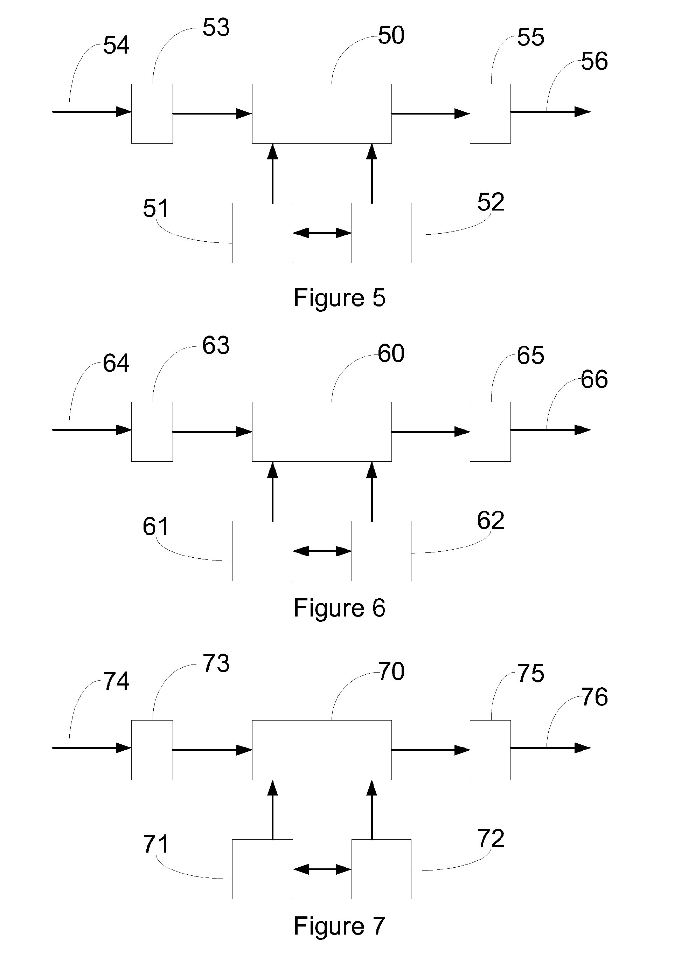

La réalisation sera mieux comprise à l'aide de la description donnée en se référant aux schémas et figures suivants. On présente, en relation avec la figure 2, un mode de réalisation de procédé de mise à jour mis en oeuvre dans l'architecture matérielle suivante :
- un ensemble 10 d'équipements terminaux de différents types, par exemple Ordinateur Personnel 11, Assistant Personnel 12 (« Personnal Digital Assistant ») et STB 13 (« Set Top Box »). La structure générale de ces équipements terminaux est illustrée schématiquement par la figure 5. Il comprend une mémoire 51, et une unité de traitement 50 équipée d'un microprocesseur, qui est piloté par un programme d'ordinateur (ou application) 52. L'unité de traitement 50 reçoit en entrée, via un module d'interface d'entrée réseau 53, des réponses de la part de serveurs ou des composants logiciels 54, que le microprocesseur traite, selon les instructions du programme 52, pour générer des requêtes et/ou des réponses 56, qui sont transmises aux serveurs via un module d'interface de sortie réseau 55.
- des serveurs 20 remplissant deux rôles : le rôle de serveur de composants logiciels 21 et le rôle de serveur d'identification de service 22. La structure d'un serveur de composants est illustrée schématiquement par la figure 6. Il comprend une mémoire 61, et une unité de traitement 60 équipée d'un microprocesseur, qui est piloté par un programme d'ordinateur (ou application) 62. L'unité de traitement 60 reçoit en entrée, via un module d'interface d'entrée réseau 63, des requêtes d'interrogation des terminaux et/ou des réponses 64, que le microprocesseur traite, selon les instructions du programme 62, pour générer des envois de composants logiciels et/ou des réponses et ou des listes de composants 66, qui sont transmises via un module d'interface de sortie réseau 65. La structure d'un serveur de gestion de service est illustrée schématiquement par la figure 7. Il comprend une mémoire 71, et une unité de traitement 70 équipée d'un microprocesseur, qui est piloté par un programme d'ordinateur (ou application) 72. L'unité de traitement 70 reçoit en entrée, via un module d'interface d'entrée réseau 73, des requêtes et/ou des réponses des terminaux quant aux souscriptions de services des clients 74, que le microprocesseur traite, selon les instructions du programme 72, pour générer des commandes et/ou des réponses de compositions de composants logiciels 76, qui sont transmises via un module d'interface de sortie réseau 75.
- un réseau 30 de communications permettant aux équipements terminaux 10 de se connecter entre eux et avec les serveurs 20.

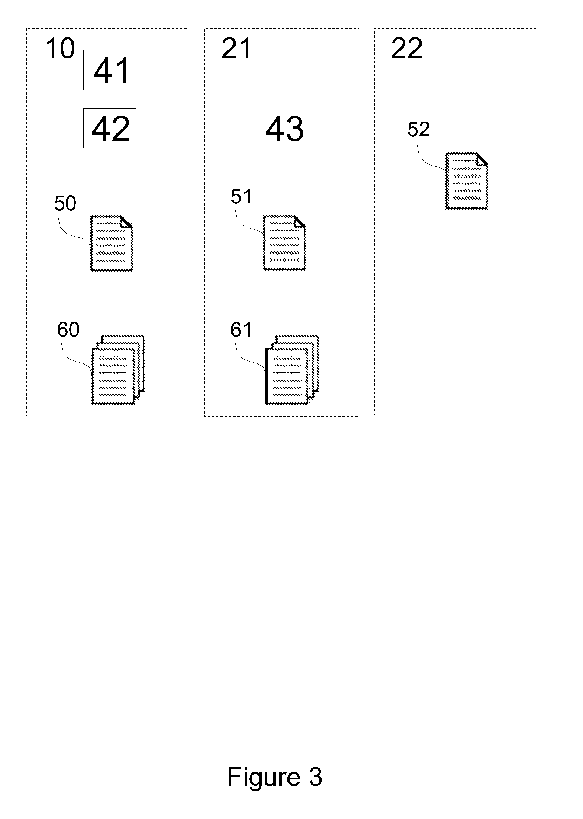

On présente, en relation avec la figure 3, la localisation des informations sur les différentes entités entrant en relation lors de la mise en oeuvre du procédé de mise à jour :
- sur chaque équipement 10 : un programme exécutable dénommé « bootstrap » 41 installé à demeure sur l'équipement, un composant « updater » (ou « de mise à jour ») 42 pour la gestion des composants, la liste 50 des composants logiciels 60 ;
- sur le serveur de logiciels 21 : un composant « updater » 43 pour la gestion des composants, des composants logiciels, la liste 51 des numéros de versions des composants logiciels 61 ;
- sur le serveur d'identification de services 22 : la liste 52 des services auxquels l'utilisateur a souscrit.

Un composant logiciel est une brique regroupant des programmes exécutables servant à la réalisation d'applications. Le programmeur utilise ces briques via des variables, méthodes, fonctions ou routines définies dans une API.

Un numéro de version est une chaîne de caractères représentative à une certaine date d'un fichier contenant un programme exécutable ou des informations plus générales. Si les informations ou le programme changent, un nouveau numéro de version est affecté au fichier. Par exemple, des numéros de version peuvent être organisés en suite de nombres entiers séparés par des points. Selon le degré de modification des informations ou du programme exécutable, un des nombres est incrémenté d'une valeur entière. Les numéros de version ainsi organisés sont ordonnés selon des numéros croissants avec le temps. Par exemple : « 2.3.4.56 »

Une liste des numéros de versions des composants logiciels comporte l'identification des composants logiciels versionnés pour chaque service, par exemple : le nom du service, le numéro de version et le nom du fichier du composant logiciel.

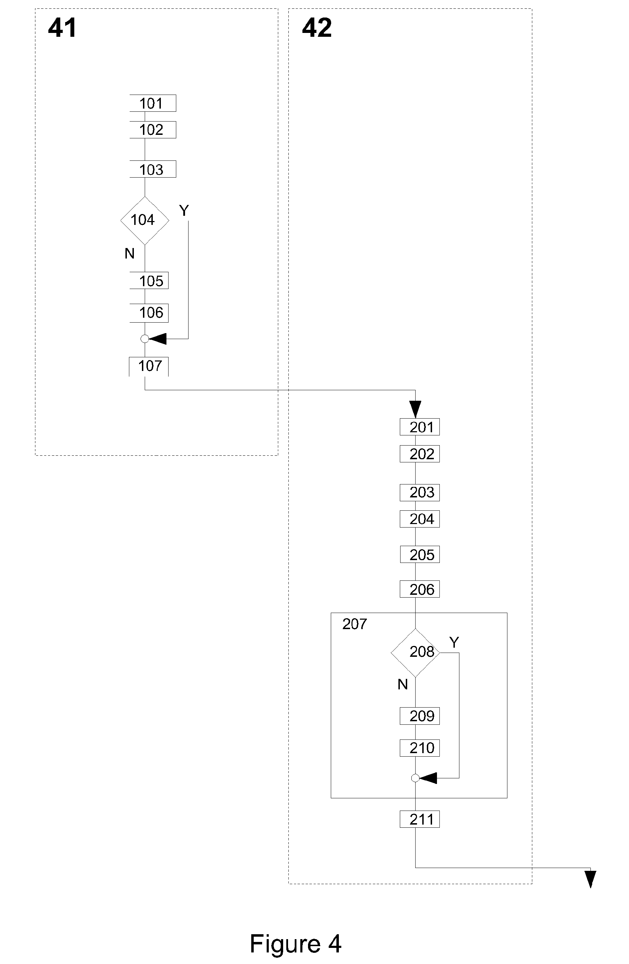

On présente, en relation avec la figure 4 et les figures 2 et 3 précédemment décrites, les étapes du procédé de mise à jour selon le mode de réalisation choisi :
Sur chacun des équipements terminaux 10, le programme « bootstrap » 41 est exécuté pour lancer l'application et comporte le minimum de fonctions pour :
   - se connecter (101) via le réseau de communications 30 au serveur de composants logiciels 21 ;
   - récupérer (102) le numéro de version en cours du composant « updater » 43 sur le serveur de composants logiciels 21 ;
   - récupérer (103) le numéro de la version locale du composant « updater » 42 sur l'équipement 10 ;
   - si (étape 104) la version disponible sur le serveur de composants logiciels 21 est différente ou si l'« updater » 42 est absent sur l'équipement 10 on procède (105) au téléchargement du composant « updater » 43 et à son installation (106) sur l'équipement 10 à la place de l'ancien 42 ;
   - passer (107) le contrôle au composant « updater » 42 sur l'équipement ;

Dans ce mode de réalisation particulier, ce « bootstrap » 41 n'est jamais modifié. Le composant « updater » 42 est automatiquement mis à jour sur l'équipement 10 si le numéro de version de celui présent est différent de celui disponible sur le serveur de logiciels 21.

Le composant « updater » 42 intervient alors pour :
- se connecter (201) au serveur d'identification de service 22 ;
- récupérer (202) la liste 52 des services auxquels l'utilisateur a souscrit ;
- se connecter au serveur (203) de composants logiciels 21 ;
- récupérer (204) la liste des numéros de version 51 des composants nécessaires à chacun de ces services et les règles de dépendance ;
- récupérer (205) localement la liste 50 des numéros de version des composants ;
- sélectionner (206) à partir de la liste 52 des services les briques devant être présentes sur l'équipement 10 ;
- pour chacune des briques sélectionnées (207) dans l'étape précédente (206) : télécharger (209) et installer (210) si (étape 208) la brique est absente ou le numéro de version disponible sur le serveur de logiciel 21 obtenu lors de la récupération de la liste des numéros de version (204) est différent du numéro de version sur l'équipement 10 obtenu lors de la récupération locale des versions des composants (205) ;
- passer le contrôle (211) à la première brique de l'application 44.

A l'issue de cette phase de mise à jour, les composants logiciels sont mis à jour et l'application peut débuter son exécution.

### 6.3. Autres caractéristiques optionnelles et avantages

Dans ce mode de réalisation du procédé de mise à jour, les équipements terminaux programmables et les serveurs sont connectés par le biais d'un réseau de communications. Les requêtes et les réponses échangées se font à l'aide du protocole « http » (« hypertext transport protocol » pour « protocole de transport hypertexte »). Les échanges applicatifs (échanges au niveau des composants « updater »), quant à eux sont réalisés à laide du protocole « SOAP ». « SOAP » est un protocole de transmission de messages. Il définit un ensemble de règles pour structurer des messages qui peuvent être utilisés dans de simples transmissions unidirectionnelles, mais il est particulièrement utile pour exécuter des dialogues requête-réponse. Les règles de structuration des échanges de « SOAP » sont basées sur le langage « XML » (« eXtensible Markup Language » pour « langage de balisage extensible »).

En relation avec la figure 4, le code « SOAP » suivant est un exemple de requête pour obtenir la liste 51 :

```
<?xml version="1.0" encoding="UTF-8"?>
<SOAP-ENV:Envelope xmlns : SOAP-ENV="http://schemas.xmlsoap .org
/soap/envelope/"
xmlns:SOAP-ENC="http://schemas.xmlsoap.org/soap/encoding/"
xmlns:xsi="http://www.w3.org/2001/XMLSchema-instance"
xmlns:xsd="http://www.w3.org/2001/XMLSchema"
xmlns:TerritoryObject="http://www.domaine.com/TerritoryControler
.xsd"
xmlns:TerritoryControler="urn:territorycontroler">
<SOAP-ENV:Body SOAP-ENV : encodingStyle= "http://schemas.
xmlsoap.org/soap/encoding/">
<TerritoryControler:getVersion>
<aVersionClient>V02.01.00</aVersionClient>
</TerritoryControler:getVersion>
</SOAP-ENV:Body>
</SOAP-ENV:Envelope>
```

Cette requête permet d'obtenir, de la part du serveur de composants logiciels, la liste 51 disponible sur le serveur en fournissant la version installée sur le client « V02.01.00 ». La réponse formulée par le serveur a alors la forme suivante :

```
<?xml version="1.0" encoding="UTF-8"?>
<SOAP-ENV:Envelope xmlns:SOAP-
ENV="http://schemas.xmlsoap.org/soap/envelope/" xmlns:SOAP-
ENC="http://schemas.xmlsoap.org/soap/encoding/"
xmlns:xsi="http://www.w3.org/2001/XMLSchema-instance"
xmlns:xsd="http://www.w3.org/2001/XMLSchema"
xmlns:TerritoryObject="http://www.domaine.com/TerritoryControler
.xsd1" xmlns:TerritoryControler="urn:territorycontroler">
<SOAP-ENV:Body SOAP-
ENV:encodingStyle="http://schemas.xmlsoap.org/soap/encoding/">
<TerritoryControler:getVersionResponse>
<Return>0</Return>
<aVersionProc>V02.01.00</aVersionProc>
<aVersionServer>V02.02.00</aVersionServer>
<aVersionDba>V01.01.00</aVersionDba>
</TerritoryControler:getVersionResponse>
</SOAP-ENV:Body>
</SOAP-ENV:Envelope>
```

Dans un mode de réalisation complémentaire, chaque terminal programmable peut également être labellisé comme « pilote » ou « non pilote » par un serveur d'identification, par exemple suivant un paramètre associé au terminal. Cette labellisation permet de caractériser certains terminaux comme étant des équipements destinés à réaliser des tests de mise en production. Lorsque un terminal labellisé « pilote » interroge le serveur d'identification ou le serveur de gestion de service pour connaître la présence d'un composant logiciel de version différente (antérieure) de sa version courante, ce serveur indiquera la présence de cette nouvelle version si elle est disponible. Dans le cas d'un équipement labellisé « non pilote », le serveur indiquera qu'aucune version différente n'est disponible. Ce mode de réalisation permet donc de prendre en compte une phase de test des versions des composants logiciels avant que ceux-ci ne soient transférés à l'ensemble des équipements, une fois qu'ils ont été validés et certifiés comme fonctionnant suivant ses spécifications.

## Revendications

1. Procédé de distribution d'au moins un premier composant logiciel, au sein d'un terminal programmable, ledit terminal programmable disposant préalablement d'au moins un deuxième composant logiciel correspondant audit au moins un premier composant logiciel, dans une version différente,
**caractérisé en ce qu'**il comprend une étape de remplacement dudit au moins un deuxième composant logiciel par ledit au moins un premier composant logiciel, si ledit au moins un premier composant logiciel est d'une version antérieure.

2. Procédé de distribution selon la revendication 1, **caractérisé en ce que**, un composant logiciel pouvant être associé à au moins un service,
ledit procédé comprend les étapes suivantes :
- identification d'au moins un premier composant logiciel appartenant à un premier ensemble de composants logiciels correspondant à au moins un service souscrit par ledit terminal programmable ;
- recherche d'une différence de version entre au moins un composant logiciel dudit premier ensemble et au moins un composant d'un deuxième ensemble de composants logiciels correspondants précédemment installés au sein dudit terminal programmable.

3. Procédé de distribution selon la revendication 2 **caractérisé en ce que** ladite étape de recherche comprend en outre les étapes suivantes :
- constitution d'une première liste de composants logiciels dépendants d'au moins un des composants logiciels dudit premier ensemble ;
- ajout des composants de ladite première liste audit premier ensemble.

4. Procédé de distribution selon la revendication 3, **caractérisé en ce que** ladite étape de constitution de ladite première liste, comprend en outre :
- une étape de détermination d'un arbre de dépendances de composants logiciels dépendants dudit composant logiciel dudit premier ensemble ;
- une étape de construction d'une deuxième liste de composants logiciels dépendant de chaque composant logiciel dudit arbre de dépendances ;
- une étape d'insertion des composants de ladite deuxième liste au sein de ladite première liste.

5. Procédé de distribution selon la revendication 4, **caractérisé en ce que** ladite étape de constitution est réalisée récursivement pour chaque composant logiciel de ladite deuxième liste.

6. Procédé de distribution selon l'une quelconque des revendications 4 et 5, **caractérisé en ce que** ladite étape de constitution de ladite première liste comprend en outre une étape de vérification de la souscription par ledit terminal programmable à au moins un service lié auxdits composants logiciels constituant ladite première liste.

7. Procédé de distribution selon l'une quelconque des revendications 4 à 6, **caractérisé en ce que** ladite étape de constitution de ladite première liste comprend en outre une étape de vérification d'une adéquation matérielle audit terminal programmable audit composants logiciels constituant ladite première liste.

8. Procédé de distribution selon l'une quelconque des revendications 1 à 7 **caractérisé en ce que** ladite étape d'identification fait appel à une base de données associant à un identifiant de chaque souscripteur, une liste d'au moins un service souscrit d'une part, et ledit premier ensemble d'autre part.

9. Procédé de mise à jour d'un moins un premier composant logiciel, au sein d'un terminal programmable,
**caractérisé en ce que** ledit premier composant logiciel est associé à au moins un service,
et **en ce que** ledit procédé comprend les étapes suivantes :
- demande de recherche d'une différence de version entre ledit au moins un premier composant logiciel et au moins un deuxième composant logiciel correspondant précédemment installés au sein dudit terminal programmable ;
- réception dudit au moins un premier composant logiciel dont la version est différente dudit au moins un deuxième composant logiciel ;
- remplacement sur ledit terminal programmable dudit au moins un deuxième composant logiciel par ledit au moins un premier composant logiciel dont la version est antérieure.

10. Système de distribution d'au moins un premier composant logiciel, au sein d'un terminal programmable, ledit terminal programmable disposant préalablement d'au moins un deuxième composant logiciel correspondant audit au moins un premier composant logiciel, dans une version différente,
**caractérisé en ce qu'**il comprend des moyens de remplacement dudit au moins un deuxième composant logiciel par ledit au moins un premier composant logiciel, si ledit au moins un premier composant logiciel est d'une version antérieure.

11. Terminal comprenant des moyens de mise à jour d'au moins un premier composant logiciel, ledit terminal programmable disposant préalablement d'au moins un deuxième composant logiciel correspondant audit au moins un premier composant logiciel, dans une version différente,
**caractérisé en ce qu'**il comprend des moyens de remplacement dudit au moins un deuxième composant logiciel par ledit au moins un premier composant logiciel, si ledit au moins un premier composant logiciel est d'une version antérieure.

12. Terminal comprenant des moyens de mise à jour d'au moins un premier composant logiciel, selon la revendication 11,
**caractérisé en ce que** ledit au moins un premier composant logiciel est associé à au moins un service,
et **en ce qu'**il comprend :
- des moyens de demande de recherche d'une différence de version entre ledit au moins un premier composant logiciel et au moins un deuxième composant logiciel correspondant précédemment installés au sein dudit terminal programmable ;
- des moyens de réception dudit au moins un premier composant logiciel dont la version est différente dudit au moins un deuxième composant logiciel.

13. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre du procédé d'au moins une des revendications 1 à 9.
